Europäisches Patentamt

(19) European Patent Office

Office européen des brevets

(11) Publication number: **0 278 998 B1**

# EUROPEAN PATENT SPECIFICATION

(45) Date of publication of patent specification:
30.01.91 Bulletin 91/05

(51) Int. Cl.⁵: **F16B 5/07**

(21) Application number: **87102215.8**

(22) Date of filing: **17.02.87**

(54) Joint construction for metal sheets.

(43) Date of publication of application:
24.08.88 Bulletin 88/34

(45) Publication of the grant of the patent:
30.01.91 Bulletin 91/05

(84) Designated Contracting States:
**AT DE ES FR GB IT SE**

(56) References cited:
**DE-C- 103 403**
**DE-C- 909 446**
**DE-U- 1 863 413**
**DE-U- 1 914 389**

(73) Proprietor: **Enami Seiki Mfg. Co., Ltd.**
**3 Wakabayashi-cho 2-chome**
**Yao-shi Osaka-fu (JP)**

(72) Inventor: **Toshiaki, Enami**
**47-2 Ooazaichihara**
**Heguri-cho Ikoma-gun Nara-ken (JP)**

(74) Representative: **Patentanwälte Kirschner &**
**Grosse**
**Forstenrieder Allee 59**
**D-8000 München 71 (DE)**

## Description

This invention relates to a joint construction between metal sheets which is made by utilizing plastic working.

As for joining metal sheets together, there have heretofore been proposed various joint constructions, including one using welding, another using rivets, another using crimping or curling technique.

For parts which are to be exposed on the outside of an article, however, it is desirable to dispense with a coating operation by using a coated steel sheets ; in that case, it is not efficient to employ a joint construction based on welding. The reason is that it would be necessary to coat the joined portions again after welding.

On the other hand, in a joint construction using rivets, the use of rivets in addition to metal sheets to be joined is required, involving performing a sequence of troublesome operations for forming a joint construction, such as drilling holes for receiving rivets, inserting rivets in the drilled holes, and crimping the rivets ; moreover, special equipment must be used.

Also, in a joint construction utilizing plastic deformation as in crimping or curling operation, coating operation can be dispensed with by using coated steel sheets. However, a special mold and equipment are required in forming the joint.

From the DE-C-909 446 a joint construction between two metal sheets is known, wherein the first metal sheet is formed with first cut-up pieces to have openings therein, a portion of one end edge of the second metal sheet partly superposed on the first metal sheet is held between said openings and said first cut-up pieces and in this state it is pressed along with the cut-up pieces so that said portion is pressed into said openings, the portion of the second metal sheet pressed into said openings is locked by the peripheral walls of the openings. Although this joint construction allows the use of coated steel sheets, it comprises a lack of reliability of the joint, especially in case of shearing or traverse forces. In this case the free end edge of the first metal sheet tends to yield away from the second metal sheet.

Accordingly, an object of the invention is to provide a joint construction for metal sheets, whereby metal sheets to be joined can be easily and reliably joined without requiring special equipment.

In a joint construction for metal sheets, a first metal sheet is formed with cut-up pieces to have openings therein. Additionally the second metal sheet is formed with second cut-up pieces to have second openings therein. Those sheets are superposed in such manner that a portion of the end of each metal sheet is held between the openings and cut-up pieces in the respective other metal sheet, and in this state they are pressed along with the cut-up pieces to press the portions into the openings. Thus, the portions of the metal sheets pressed to the openings are locked by the inner peripheral walls of the openings. Thus, a rugged joint construction can be obtained by simply pressing a portion of the metal sheets into the openings in the other metal sheet by using a simple press device.

These objects features, aspects and advantages of the present invention disclosed in claims 1 and 2 will become more apparent from the following detailed description of the present invention when taken in conjunction with the accompanying drawings.

Fig. 1 is a perspective view of a first metal sheet and a second metal sheet which are used to obtain a joint construction according to one embodiment of the invention ;

Fig. 2 is a perspective view showing a joint construction formed by using the first and second metal sheets shown in Fig. 1 ; and

Fig. 3 is a sectional view taken along the line XIII-XIII in Fig. 2.

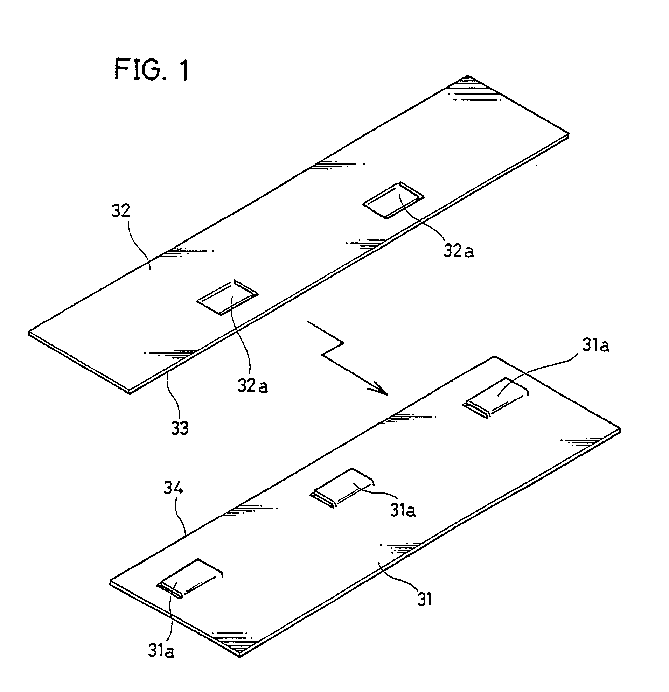

Figs. 1 through 3 are views for explaining one embodiment of the invention. In the joint constructon of this embodiment, a first metal sheet 31 and a second metal sheet 32 shown in Fig. 1 are used. The first metal sheet 31 is formed with first cut-up pieces 31a to have first openings therein, said cut-up pieces being spaced a predetermined distance in the direction of the length of the first metal sheet 31.

The second metal sheet 32 is also formed with second cut-up pieces 32a to have second openings therein, said cutup pieces being parallel to the end edge 33 of the second metal sheet 32 and being spaced a predetermined distance from each other. However, the second cut-up pieces 32a are directed downwardly of the second metal sheet 32.

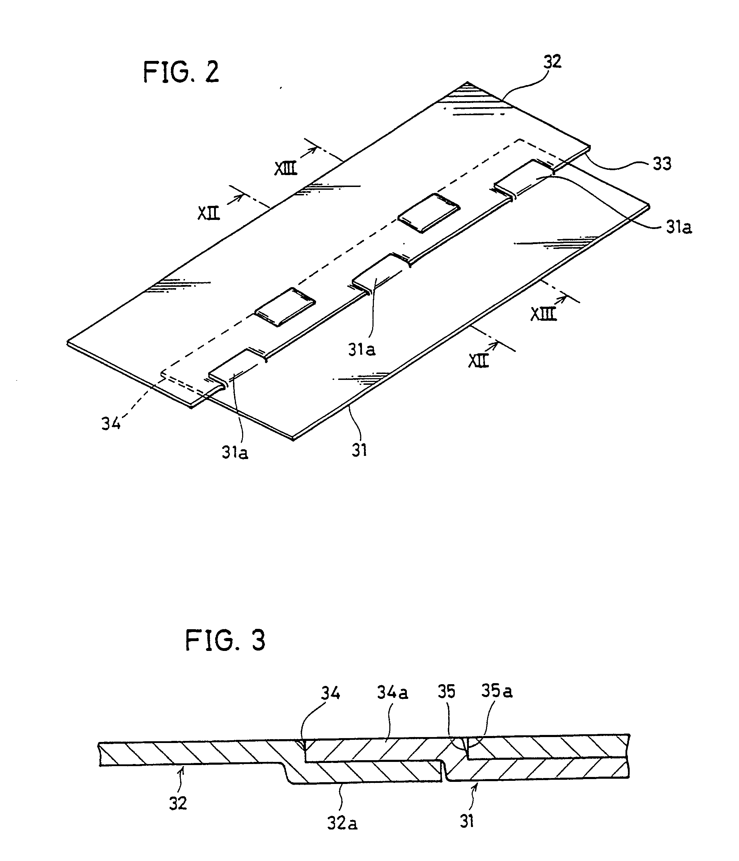

In joining the first and second metal sheets 31 and 32, the second metal sheet 32 is partly superposed on the first metal sheet 31 so that the end edge 33 of the second sheet 32 is held between the first cut-up pieces 31a and the main surface of the first metal sheet 31. In this case, on the second metal sheet 32, the end edge 34 of the first sheet 31 is held between the second cut-up pieces 32a and the back of the second metal sheet 32. Thus, a joint construction shown in Fig. 2 which is a perspective view is obtained by performing a press operation in this assembled state.

In the construction shown in Fig. 2, the joint portion shown in sectional view taken along the line XII-XII, i.e., the joint portion of the first cut-up pieces 31a and first opening in the first metal sheet 31 and of the second metal sheet 32, is shown.

The joint portion shown in sectional view taken along the line XIII-XIII in Fig. 2 is shown in Fig. 3. As is clear from Fig. 3, there is shown a joint construction which is reverse to the one formed on the side associated with the first cut-up pieces 31a. More particularly, the portion 34a of the first metal sheet 31 adjacent its end edge 34 enters the second openings 35 formed in the second metal sheet 32 and is pressed along with the second cut-up pieces 32a so that it is locked by the peripheral walls 35a of the second openings 35.

That is, in the joint construction shown in Fig 2, a joint construction formed by utilizing the second cut-up pieces 32a and second openings 35 formed in the second metal sheet 32 and the portion of the first metal sheet 31 adjacent its end edge 31 has been formed. Thus, even if the joint construction is subjected to an external force which ends to move the first and second metal sheets 31 and 32 away from each other, there is much less danger of them being dislocated ; thus, the first and second metal sheets 31 and 32 can be more firmly joined.

## Claims

1. A joint construction between two metal sheets which is made by joining first and second metal sheets, wherein :

the first metal sheet is formed with first cut-up pieces to have openings therein,

a portion of one end edge of the second metal sheet partly superposed on the first metal sheet is held between said openings and said first cut-up pieces,

**characterized** in that said second metal sheet is formed with second cut-up pieces to have second openings therein,

the end edge of said first metal sheet on the side associated with the second metal sheet is held between said second openings and said second cut-up pieces and in this state the sheets are pressed along with the respective openings,

whereby the portion of the metal sheets pressed into the openings of the other one and are locked by the peripheral walls of the openings.

2. A method for making a sheet metal joint between an edge of a first piece of sheet metal and a second piece of sheet metal, **characterized** by the following steps :

(a) leaving said edges of said pieces of sheet metal as a flat edge initially undisturbed and without any holes,

(b) punching a plurality of generally U-shaped slots into (a) said sheet metal pieces for forming a tongue surrounded by its respective U-shaped slot,

(c) bending said tongue out of said sheet metal piece sufficiently for forming a gap between said tongue and said sheet metal piece,

(d) pushing said initially undisturbed holeless flat edges of said sheet metal pieces into said gaps of the respective other one,

(e) pressing said tongues against said sheet metal pieces for plastically deforming a portion of said sheet metal pieces into said U-shaped slots surrounding said tongues, whereby said plastically deformed portion of said sheet metal pieces anchors said first sheet metal piece to said second sheet metal piece and whereby said pressed tongues maintain the anchoring.

## Ansprüche

1. Verbindung für zwei Metallplatten, die durch das Verbinden erster und zweiter Metallplatten geschaffen wird, wobei :

die erste Metallplatte mit ersten hochgeschnittenen Teilen zur Öffnungsbildung darin ausgebildet ist,

ein Teil einer Endkante der zweiten Metallplatte, die teilweise die erste Metallplatte überlappt, zwischen den Öffnungen und den ersten hochgeschnittenen Teilen gehalten wird,

**dadurch gekennzeichnet, daß** die zweite Metallplatte mit zweiten hochgeschnittenen Teilen zur Bildung von zweiten Öffnungen darin ausgebildet ist,

die Endkante der ersten Metallplatte auf der Seite, auf der sie mit der zweiten Metallplatte in Verbindung steht, zwischen den zweiten Öffnungen und den zweiten hochgeschnittenen Teilen gehalten ist,

wobei der Teil der Metallplatten, der in die Öffnungen der jeweils anderen gepreßt wird, durch die Umfangswände der Öffnungen eingerastet wird.

2. Verfahren zur Bildung einer Verbindung von Metallplatten zwischen einer Kante einer ersten Metallplatte und einer zweiten Metallplatte, **gekennzeichnet durch folgende Schritte :**

(a) Belassen der Kanten der Metallplatten als flache anfänglich unbeeinflußte Kanten ohne irgendwelche Löcher,

(b) Einstanzen einer Vielzahl von im allgemeinen U-förmigen Schlitzen in die Metallplatten zur Bildung einer Zunge, die jeweils von ihrem U-förmigen Schlitz umgeben ist,

(c) Herausbiegen der Zungen aus der Metallplatte in ausreichendem Maße, so daß ein Zwischenraum zwischen der Zunge und der Metallplatte entsteht,

(d) Hineindrücken der eingangs unbehandelten, lochlosen, flachen Kanten der Metallplatten in die Zwischenräume der jeweils anderen Platte,

(e) Drücken der Zungen gegen die Metallplatten, um einen Teil der Metallplatten plastisch in die U-förmigen, die Zungen umgebenden Schlitze zu verformen, wodurch die plastisch verformten Teile der Metallplatten die erste Metallplatte mit der zweiten Metallplatte verankern und wodurch die eingedrückten Zungen die Verankerung aufrechterhalten.

## Revendications

1. Assemblage pour deux feuilles métalliques, créées au moyen de joindre une première feuille métallique avec une deuxième feuille métallique, et en ce

la première feuille métallique est formée avec de premières parties coupeés contre-haut afin de former des ouvertures,

une partie d'un bord final de la deuxième feuille métallique, partiellement recouvrant la première feuille métallique, est tenue entre les ouvertures et les premières parties coupées contre-haut,

**caractérisé en ce que** la deuxième feuille métallique est formée avec deuxièmes parties coupées contre-haut pour la formation de deuxièmes ouvertures en celle-la,

le bord final de la première feuille métallique est tenu entre les deuxièmes ouvertures et les deuxièmes parties coupées contre-haut de ce côté, du côté où il est en conjointement avec la deuxième feuille métallique,

la partie des feuilles métalliques, qui est pressée dans les ouvertures de la respectivement autre feuille, étant arrêtée par les parois périphériques des ouvertures.

2. Procédé de créer un assemblage pour feuilles métalliques entre un bord d'une première feuille métallique et d'une deuxième feuille métallique, **caractorisé en les mésures suivantes :**

(a) tenant les bords des feuilles métalliques en forme de plans bords non influencés initialement et ne pas comportant quelques ouvertures,

(b) ajourant une pluralité de fentes généralement en forme d'U dans les feuilles métalliques afin de la formation d'une lame respectivement entourée par sa fente à U,

(c) cambrant en haut des lames de la feuille métallique à un degré suffisant pour la formation d'une lacune entre la lame et la feuille métallique,

(d) enfonçant les plans bords non-traités initialement et sans ouvertures des feuilles métalliques dans les lacunes de la réspectivement autre feuille,

(e) pressant les lames contre les feuilles métalliques afin de déformer plastiquement une partie des feuilles métalliques dans les fentes en forme d'U entourant les lames, par quoi les parties déformées plastiquement des feuilles métalliques ancrent la première feuille métallique avec la deuxième feuille métallique et par quoi les lames enfoncées maintiennent l'ancrage.

FIG. 1

32

32a

32a

33

34

31a

31a

31a

31

5

## FIG. 2

## FIG. 3